# EUROPEAN PATENT SPECIFICATION

(11) **EP 1 322 712 B1**
(45) Date of publication and mention of the grant of the patent: **19.01.2005**
(21) Application number: 01984536.1
(22) Date of filing: 26.07.2001
(51) Int. Cl.: C09D 11/00

(54) **PROCESS FOR INK-JET PRINTING AND COMPOSITIONS FOR INK-JET PRINTING**
TINTENSTRAHLDRUCK-VERFAHREN UND TINTENZUSAMMENSETZUNGEN FÜR TINTENSTRAHLDRUCK
PROCEDE D'IMPRESSION A JET D'ENCRE ET COMPOSITIONS POUR IMPRESSION A JET D'ENCRE

(30) Priority: 24.08.2000 GB 0020785
(43) Date of publication of application: 02.07.2003
(73) Proprietor: Avecia Limited, Blackley, Manchester M9 8ZS (GB)
(72) Inventor: CORDWELL, Richard John, Manchester M9 8ZS (GB); COTTRELL, David, Manchester M9 8ZS (GB); EWING, Paul Nicholas, Manchester M9 8ZS (GB); MAHON, Paul Francis, Manchester M9 8ZS (GB); YEATES, Stephen George, Manchester M9 8ZS (GB)
(74) Representative: Mayall, John
(86) International application number: PCT/GB2001/003355
(87) International publication number: WO 2002/016512

(56) References cited:
- WO-A-98/14524
- US-A- 5 969 003
- US-A- 5 977 209

## Description

This invention relates to a process for ink-jet printing, compositions for ink-jet printing, substrates printed using the process or composition and to ink-jet printer cartridges.

Ink-jet printing involves printing an image onto a substrate using ink droplets ejected through a fine nozzle onto a substrate without bringing the fine nozzle into contact with the substrate.

There are many demanding performance requirements for colorants and inks used in ink-jet printing. For example they desirably provide sharp, non-feathered images having good water-fastness, light-fastness and optical density. The inks are often required to dry quickly when applied to a substrate to prevent smudging, but they should not form a crust which would block the tip of the fine nozzle and impede the printing process. The inks should also be stable to storage over time without decomposing or forming a precipitate which could also block the fine nozzle.

Thermal and piezoelectric ink-jet printers are widely used, thus there is a need for inks, suitable for use in both types of printers, having high colour strength and giving images having a high light-fastness and water-fastness when printed on a typical substrate.

A particular problem for photorealistic quality printing is that of light-fastness. Prints are often exposed to daylight for long periods and there is a need for the image to have as good lightfastness as possible. The use of pigments in this area is perceived to offer enhanced light-fastness but often at the expense of poor physical image durability (rub fastness) and gloss. This invention relates to an ink-jet printing process using pigment formulations which leads to improvements in the light-fastness, gloss and/or rub fastness of inkjet prints.

According to the present invention there is provided a process for ink-jet printing an image on a substrate comprising applying thereto a composition comprising:
(a) Water-dissipatable polyester comprising polyethylene oxide segment(s);
(b) pigment;
(c) water; and
(d) water miscible solvent.

The water-dissipatable polyester can be prepared using conventional polymerisation procedures known to be effective for polyester synthesis. Thus, it is well known that polyesters contain carbonyloxy (i.e. -C(=O)-O-) linking groups and may be prepared by a condensation polymerisation process in which an acid component (including ester-forming derivatives thereof) is reacted with a hydroxyl component. The acid component may be selected from one or more polybasic carboxylic acids, e.g. di- and tri-carboxylic acids or ester-forming derivatives thereof, for example acid halides, anhydrides or esters. The hydroxyl component may be one or more polyhydric alcohols or phenols (polyols), for desired, a proportion of carbonylamino linking groups -C(=O)-NH- (i.e. amide linking groups) by including an appropriate amino functional reactant as part of the "hydroxyl component"; such as amide linkages. The reaction to form a polyester may be conducted in one or more stages. It is also possible to introduce in-chain unsaturation into the polyester by, for example, employing as part of the acid component an olefinically unsaturated dicarboxylic acid or anhydride.

The polyethylene oxide segments, may be within the polyester backbone (i.e. in-chain incorporation) and/or as chain-pendant or terminal groups. Such groups may act to contribute to the dispersion stability or even water-solubility of the polyester. Their presence in the water dissipatable polyester can allow a much greater range of formulations based on the present invention to be made. In particular water dissipatable polyesters containing these groups may aid the colloidal stability of the composition of the present invention, especially in the presence of polyelectrolytes. The presence of these groups in the water dissipatable polyester can also enables compositions of low viscosity to be made more easily.

Polyethylene oxide chains may be introduced into the polyester during its synthesis by using as part of the hydroxyl component, ethylene oxide-containing mono, di or higher functional hydroxy compounds, especially polyethlene glycols and alkyl ethers of polyethylene glycols, examples of which include: 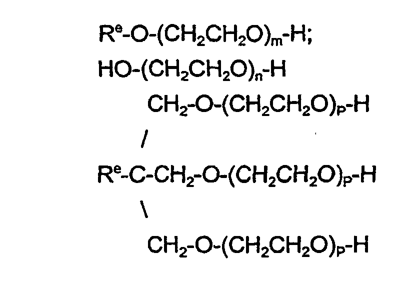 wherein R^{e} is C₁₋₂₀-alkyl, preferably C₁₋₄-alkyl, more preferably methyl; m is 1 to 500 (preferably 3 to 50), n is 3 to 500 (preferably 3 to 50); and p is 1 to 100 (preferably 3 to 50).

Alternately the polyethylene oxide chains may be introduced into the polyester during its synthesis by using an amine ended polyethylene glycol such as Jeffamine^{RTM} M1000 from Huntsman. Most preferably the polyethylene oxide segment(s) is derived from methoxy polyethylene glycol preferably wherein m is in the range from 5 to 50.

A small segment of a polyethylene oxide chain could be replaced by a propylene oxide or butylene oxide chain in such non-ionic groups, but should still contain ethylene oxide as a major part of the chain.

The polyethylene oxide chain content should preferably not exceed 25% by weight and more preferably should not exceed 15% by weight, based on the total weight of the polyester, in order to avoid unacceptable water-sensitivity. Therefore the water-dissipatable polyester preferably comprises 0.1 to 25% by weight, more preferably 0.1 to 15% by weight of the polyethylene oxide segment based on the total weight of polyester.

Preferably the water dissipatable polyester further comprises ionised carboxy and/or sulphonate groups.

Polyesters bearing ionised sulphonate groups may be prepared by using at least one monomer having two or more functional groups which will readily undergo an ester condensation reaction (e.g. carboxyl groups, hydroxyl groups or esterifiable derivatives thereof) and one or more sulphonic acid groups (for subsequent neutralisation after polyester formation) or ionised sulphonate groups (i.e. neutralisation of the sulphonic acid groups already having been effected in the monomer) in the synthesis of the polyester. In some cases it is not necessary to neutralise sulphonic acid groups since they may be sufficiently strong acid groups as to be considerably ionised in water even without the addition of base. Often, the sulphonic acid or ionised sulphonate containing monomer is a dicarboxylic acid monomer having at least one ionised sulphonate substituent thereby avoiding any need to effect neutralisation subsequent to polyester formation. Alternatively, alkyl carboxylic acid ester groups may be used in place of the carboxylic acid groups as ester-forming groups. Such a monomer will therefore be part of the acid component used in the polyester synthesis.

Preferred polybasic carboxylic acids which can be used to form the polyester have two or three carboxylic acid groups. For example, one can use C₄ to C₂₀ aliphatic, alicyclic and aromatic compounds having two or more carboxy groups and their ester forming derivatives (e.g. esters, anhydrides and acid chlorides), and dimer acids such as C36 dimer acids. Specific examples include adipic acid, fumaric acid, maleic acid, succinic acid, itaconic acid, sebacic acid, nonanedioic acid, decanedioic acid, 1,4-cyclohexanedicarboxylic acid, 1,3-cyclohexanedicarboxylic acid, 1,2-cyclohexane dicarboxylic acid, terephthalic acid, isophthalic acid, phthalic acid and tetrahydrophthalic acid and their acid chlorides. Anhydrides include succinic, maleic, phthalic and hexahydrophthalic anhydrides.

Preferred polyols which can be used to form the polyester include those having from 2 to 6, more preferably 2 to 4 and especially 2 hydroxyl groups per molecule. Suitable polyols having two hydroxy groups per molecule include diols such as 1,2-ethanediol, 1,3-propanediol, 1,4-butanediol, 1,6-hexanediol, 2,2-dimethyl-1,3- propanediol (neopentyl glycol), the 1,2-, 1,3- and 1,4-cyclohexanediols and the corresponding cyclohexane dimethanols, diethylene glycol, dipropylene glycol, and diols such as alkoxylated bisphenol A products, e.g. ethoxylated or propoxylated bisphenol A. Suitable polyols having three hydroxy groups per molecule include triols such as trimethylolpropane (1,1,1-tris (hydroxymethyl)ethane). Suitable polyols having four or more hydroxy groups per molecule include pentaerythritol (2,2-bis(hydroxymethyl)-1,3-propanediol) and sorbitol (1,2,3,4,5,6-hexahydroxyhexane).

Compounds having two or more groups which readily undergo an ester condensation reaction and have one or more sulphonate groups are dicarboxylic acid monomers having at least one ionised sulphonate group. Examples of such compounds are aromatic dicarboxylic acids having an ionised sulphonate group, for example those of the formula: 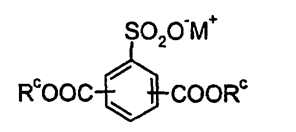 wherein M is a cation (preferably sodium, lithium or potassium)-, and each R^{c} independently is H, a cation or C₁₋₄-alkyl (preferably methyl or ethyl). Preferred compounds of the above formula are of formula: 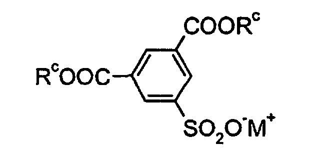 wherein M and Rc are as defined above. Particularly preferred is the mono sodium salt (one R^{c} is H, the other is Na), this material being known as sodio-5-sulphoisophthalic acid (SSIPA).

Other useful compounds which have two or more groups which readily undergo an ester condensation reaction and have one or more sulphonate groups are dihydroxy monomers having at least one sulphonate group, especially those of the formula: 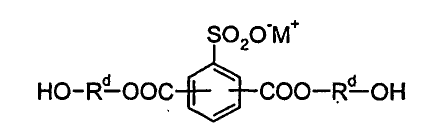 wherein M is as hereinbefore defined above and each R^{d} independently is alkylene, preferably C₂₋₄-alkylene. Preferred compounds of the above formula are: 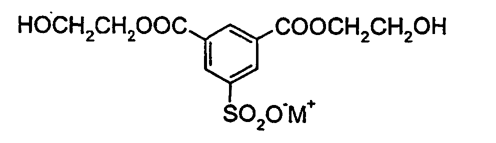 wherein M is as hereinbefore defined.

Polyesters bearing ionised carboxy groups can be prepared by various means. For example, if the hydroxyl component of the reactants is stoichiometrically in excess of the acid component, a hydroxyl-terminated polyester can be formed, which may be subsequently converted to a carboxy terminated polyester by wholly or partially reacting the hydroxyl groups with an appropriate reagent (e.g. an acid anhydride or a dicarboxylic acid). Alternatively, terminal carboxy functionality may be directly introduced by employing an appropriate stoichiometric excess of the acid component reactants. In another alternative, chain-pendant carboxy groups may be introduced by using reagents such as dimethylol propionic acid (DMPA) since if appropriate reaction condition are employed (e.g. polymerisation temperature below 150°C) the hindered carboxy group thereof does not take part to any significant extent in the ester-forming reactions during the polyester synthesis and the DMPA effectively behaves as a simple diol. Chain-pendant and/or terminal carboxy groups could also be introduced by employing a tri- or higher functionality carboxylic acid or anhydride in the polyester synthesis, for example, trimellitic acid or anhydride. Combinations of the above procedures could also be used. It is thus seen that terminal or side-chain carboxy groups or both can be introduced as desired. These can be fully or partially neutralised with an appropriate base to yield ionised carboxy groups. The counter ions used may be as for the ionised sulphonate groups described above (apart from H⁺ since the carboxylic acid groups themselves are normally insufficiently ionised to provide a significant amount of ionised carboxy groups - although F substituents would increase acid strength), with alkali metal ions such as Na⁺, Li⁺ and K⁺ again being particularly preferred, and ammonium and organic amine derived cations less preferred because some have an undesirable odour.

The amount of ionised sulphonate and/or carboxy groups present in the polyester should be sufficient to provide or contribute to water-dissipatability of the polyester, although it should not be so high as to render the resulting polyester unacceptably water- sensitive. This amount will depend, inter alia, on factors such as the hydrophilicity/hydrophobicity of units provided by other monomers in the polyester synthesis or any surfactants (if used), and also the relative proportions of ionised sulphonate/carboxy groups. With regard to the last mentioned point, ionised sulphonate groups are more effective at providing or contributing to water-dissipatability than ionised carboxy groups and so can be used at considerably lower levels in comparison to ionised carboxy groups.

If the polyester is wholly or predominantly sulphonate stabilised (by which is meant the water dissipatability-providing groups are provided wholly or predominately by ionised sulphonate groups). The ionised sulphonate group content is preferably within the range from 7.5 to 100 milliequivalents (more preferably 10 to 75 milliequivalents and particularly 11 to 56 milliequivalents) per 100 g of polyester. When using SSIPA as the monomer for providing the ionised sulphonate groups, the amount of this monomer used in the polyester synthesis, based on the weight of all the monomers used in the polyester synthesis, will usually be within the range from 2 to 20% by weight (more usually 3 to 15% by weight). The carboxylic acid value (AV) of the polyester which is predominantly sulphonate stabilised, i.e. an AV based on the carboxylic acid groups only (i.e. excluding sulphonate groups) will generally be within the range of from 0 to 100 mgKOH/g, more preferably 0 to 50 mgKOH/g, especially 0 to 25 mgKOH/g, more especially 0 to 10 mgKOH/g.

If the polyester is predominantly stabilised by ionised carboxy groups, the carboxylic acid value AV of the polyester is preferably within the range of from 20 to 140 mgKOH/g (more preferably 30 to 100 mgKOH/g).

Usually, the polyester is either predominantly sulphonate-stabilised or predominantly carboxylate stabilised (preferably the former).

The water-dissipatable polyester preferably has a number average molecular weight (ie) Mn of up to 30,000. The Mn is preferably in the range from 500 to 30,000, more preferably 1,000 to 25,000, especially 2,000 to 20,000. These Mn lead to particularly good storage stability for the resultant inks. The measurement of Mn is well known to those skilled in the art, and may for example be effected using gel permeation chromatography in conjunction with a standard polymer such as polystyrene or polymethylmethacrylate of known molecular weight.

The water-dissipatable polyester preferably has a hydroxyl number of from 0 to 225mg KOH/g, more preferably 0 to 125mg KOH/g, especially from 0 to 50mgKOH/g. In alternative embodiments the hydroxyl number is from 10 to 350mg KOH/g or 10 to 200mg KOH/g.

The Tg of the water-dissipatable polyester (i.e. the temperature at which the polymer changes from a glassy, brittle state to a plastic, rubbery state) is preferably in the range -38°C to 105°C, more preferably -20 to 70°C, especially -10°C to 60°C.

The esterification polymerisation processes for making the polyesters for use in invention composition are known and need not be described here in more detail. Suffice to say that they are normally carried out in the melt using catalysts, for example a tin- based catalyst, and with the provision for removing any water or alcohol formed from the condensation reaction.

The water-dissipatable polyester may be dissipated in water by adding the solidified melt directly into water. The solidified melt is preferably in a form such as flake (which can often be obtained directly from the melt) or comminuted solid (obtained for example by grinding). Alternatively, water can be added directly to the hot polyester melt until the desired solids content/viscosity is reached. Still further, the polyester may be dissipated in water by adding an aqueous pre-dissipation (or organic solvent solution) of the polyester to the water phase.

The water-dissipatable polyesters normally do not need an external surfactant when being dissipated into water, although such surfactants may be used to assist the dissipation if desired and in some cases can be useful in this respect because additional surfactants reduce the required amount of dissipating groups (i.e. sulphonate, and polyethylene oxide chains).

The water-dissipatable polyester may also be formed by performing free radical polymerisation of olefinically unsaturated monomers in the presence of a polyester. This gives what could be called a polyester-acrylic hybrid. Olefinically unsaturated monomers which can be used include olefinically unsaturated carboxy functional monomers, e.g. acrylic acid, methacrylic acid, fumaric acid, itaconic acid and β-carboxyethyl acrylate; olefinically unsaturated monomers which are free from carboxy and hydroxy groups, e.g. 1,3-butadiene, isoprene, styrene, vinylidene halides, vinylidene esters and esters of acrylic acid and methacrylic acid, e.g. methyl (meth) acrylate, ethyl (meth)acrylate n-butyl (meth)acrylate and 2-ethyl hexyl (meth)acrylate; and olefinically unsaturated monomers having a hydroxy group e.g. N-methylol (meth)acrylamide and hydroxy C₂₋₈-alkyl esters of (meth)acrylic acid. If the polyester has been prepared using a component which has unsaturation therein, e.g. fumaric acid, maleic acid or muconic acid or allyl-containing dihydroxy or dicarboxy compounds, the product from the polyesterification reaction will have unsaturation incorporated into its structure which can take part in the free radical polymerisation to give a graft copolymer. The free radical polymerisation processes use a free-radical generating initiator system such as (for example) the redox radical initiator system tertiary butythydroxide/isoascorbic acid and will take place in the aqueous phase, rather than in the melt. However, excessive amounts of acrylic polymer (whether formed in the presence of polyester which has unsaturation or is free from unsaturation) often leads to a deterioration in ink properties and it is preferred that no acrylic polymer is present or, if its is present, the amount is less than 40%, preferably less than 30%, more preferably less than 10% by weight relative to the weight of polyester.

Preferably the polyester is free from urethane groups.

The pigment (component (b)) is preferably a water-insoluble colorant, preferably inorganic or more preferably organic. Preferred inorganic pigments include titanium dioxide, zinc oxide, zirconium oxide, chromium oxide, iron oxide and combinations thereof.

Preferred organic pigments include phthalocyanine, anthraquinone, perinone, indigoid, perylene, azo, carbon black, carbon black pigments carrying ionic groups, azomethine, condensed ring pigments and pigments as mentioned in the Colour Index international, Third Edition (1982) Pigments and Solvent dyes, pages 10 to 143, which are incorporated herein by reference thereto. Preferred pigments are yellow, red, orange, green, violet, indigo, white, blue, or black organic and/or inorganic pigments. In particular it has been found that when using a coloured pigment (ie not black) the light-fastness of prints prepared using the inks is greatly improved. This improvement is particularly noticeable with coloured inorganic and/or organic pigments other than black pigments, for example yellow, red, orange, green, violet; indigo and blue pigments which tend to have lower light-fastness than black pigments.

When used in ink-jet printing the particle size of the pigment is important in achieving an acceptable ink. Thus, it is preferred that the pigment has a mean particle size of from about 5 to 500 nm, more preferably of from 5 to 200 nm. However particle sizes outside of this range may be used, depending on the diameters of the ink-jet printer nozzle.

The pigment is preferably either a self dispersable pigment or a pigment coated with a dispersant.

Preferably the pigment carries ionic groups on its surface, for example anionic and/or cationic groups. The anionic groups preferably comprise carboxylic, sulphonic or phosphonic acid groups. The cationic groups preferably comprise a quaternary ammonium groups. Pigment dispersions of this type are marketed by Rohm and Haas under the Acryjet trademark, for example AcryJet™ black 357, orange-57, magenta-127, yellow-1547, green-367, cyan-157 and yellow-747.

An alternative approach to obtaining stable dispersions is to use an external stabilising agent.

The pigment used in the composition of the present invention optionally comprises a mixture of two or more pigments. Pigments are present in any effective amount in the composition, preferably from 0.1 to 20 percent, more preferably 0.1 to 10 percent, especially 0.1 to 5 percent by weight of the composition.

Suitable water-miscible organic solvents include methanol, ethanol, n-propanol, isopropanol, n-butanol, sec-butanol, tert-butanol, isobutanol, dimethytformamide, dimethylacetamide, acetone, diacetone alcohol, tetrahydrofuran, dioxane, ethylene glycol, propylene glycol, butylene glycol, pentylene glycol, hexylene glycol, diethylene glycol, thiodiglycol, polyethylene glycol, polypropylene glycol, glycerol, 1,2,6-hexanetriol, 2-methoxyethanol, 2-(2-methoxyethoxy)ethanol, 2-(2-ethoxyethoxy) ethanol, 2-(2-butoxyethoxy)ethanol, 3-butoxypropan-1-ol, 2-[2-(2-methoxyethoxy)-ethoxy]ethanol, 2-[2-(2-ethoxyethoxy)ethoxy]-ethanol, optionally substituted pyrrolidones, sulpholane and mixtures containing two or more of the aforementioned water-miscible organic solvents. Preferred water-miscible organic solvents are tetrahydrofuran, dioxane, ethylene glycol, propylene glycol, butylene glycol, pentylene glycol, hexylene glycol, glycerol, optionally substituted pyrrolidones, and sulpholane.

Preferably the water miscible solvent comprises a mixture of 2 or more, especially from 2 to 8, water miscible solvents.

The compositions according to the present invention may be prepared by combining components (a), (b), (c) and (d) in any order or simultaneously. Suitable combining techniques are well known in the art, for example agitation, grinding, milling, ultrasonication and/or stirring of all the components. Preferably components (a), (b), (c) and (d) are combined together under conditions which retain stability and avoid flocculation. The preferred pH of the composition is from 5 to 11, more preferably of from 5.5 to 8.

Preferably the composition comprises:
(i) from 0.1 to 20 parts, more preferably 0.1 to 10 parts, especially 0.1 to 5 parts of component (a);
(ii) from 0.1 to 20 parts, more preferably 0.1 to 10 parts, especially 0.1 to 5 parts of component (b);
(iii) from 0.1 to 99.7 parts, more preferably 40 to 90 parts, especially 60 to 80 parts of component (c); and
(iv) from 0.1 to 99.7 parts, more preferably 10 to 60 parts, especially 20 to 40 parts of component (d);
wherein all the parts are by weight and the parts by weight of (i) + (ii) + (iii) +(iv) add up to 100.

In addition to components (a), (b) (c) and (d) the composition optionally contains other components, such as a biocide, for example Proxel GXL (Proxel is a trade mark of Avecia Limited) or Kathon (Kathon is a trade mark of Rohm and Haas), a fungicide, a rheological agent, e.g. a wax (e.g. beeswax), a clay (e.g. bentonite), an IR absorber, or a fluorescent brightener, for example C.I.Fluorescent Brightener 179 and/or UV absorber, for example hydroxy phenylbenzotriazole. Furthermore the compositions optionally contain a surface active agent, wetting agent and/or an emulsifier, for example those described in McCutcheon's Emulsifiers and Detergents 1996 International Edition or in Surfactants Europa 3^{rd} Edition 1996 each of which is incorporated herein by reference. Dyes may also be added to the composition if desired to alter the shade.

Preferably the composition is free from water immiscible solvents, it is especially preferred that the composition is free from benzyl alcohol.

The viscosity of the composition is preferably less than 100cp(mPa.s), more preferably less than 50cp(mPa.s), especially less than 20cp(mPa.s), more especially less than 15cp(mPa.s) and most preferably less than 10cp(mPa.s) at 20°C.

Preferably the composition has been filtered through a filter having a mean pore size below 10 µm, preferably below 5 µm, more preferably below 2 µm, especially below 0.5 µm. In this way particulate matter is removed which could otherwise block fine nozzles in an ink-jet printer.

The composition preferably has a total concentration of divalent and trivalent metal ions, other than those bound to the pigment, below 5000, more preferably below 1000, especially below 100, more especially below 20 parts per million by weight relative to the total weight of the composition. Pure compositions of this type may be prepared by using high purity ingredients and/or by purifying the composition after it has been prepared.

Suitable purification techniques are well known, for example ultrafiltration, reverse osmosis, ion exchange and combinations thereof.

In view of the preferences above, a preferred composition has the following characteristics;
i) a viscosity less than 100 cp(mPa.s) at 20°C;
ii) the composition has been filtered through a filter having a mean pore size below 10 µm; and
iii) a total concentration of divalent and trivalent metal ions, other than those bound to the pigment, below 5000 parts per million by weight relative to the total weight of the composition.

Preferably the composition is an ink or liquid dye concentrate, more preferably an ink suitable for use in an ink-jet printer.

These compositions have the advantage that they are suitable not only for the use in piezoelectric ink-jet printers but also in thermal and continuous ink-jet printers. Such compositions form discrete droplets on the substrate with little tendency for diffusing. Consequently sharp images with excellent print quality and little if any bleed between colours printed side by side can be obtained. Furthermore the compositions show good storage stability, wet- and light-fastness, good gloss and rub resistance.

The ink-jet printer preferably applies the composition to the substrate in the form of droplets which are ejected through a small nozzle onto the substrate. Preferred ink-jet printers are piezoelectric ink-jet printers and thermal ink-jet printers. In thermal ink-jet printers, programmed pulses of heat are applied to the compositions in a reservoir by means of a resistor adjacent to the nozzle, thereby causing the compositions to be ejected in the form of small droplets directed towards the substrate during relative movement between the substrate and the nozzle. In piezoelectric ink-jet printers the oscillation of a small crystal causes ejection of the compositions from the nozzle. In WO 00/48938 and WO 00/55089 a new form of piezoelectric technology is described where ink is ejected from an ink ejection nozzle chamber utilizing an electromechanical actuator connected to a paddle or plunger which moves towards the ejection nozzle of the chamber for the ejection of drops of ink from the ejection nozzle chamber.

The substrate is preferably a paper, plastic, or textile material, more preferably a paper, an overhead projector slide or a textile material, especially paper.

Preferred papers are plain, coated or treated papers which may have an acid, alkaline or neutral character. Most preferably the substrate is a coated paper.

A second aspect of the invention provides a composition comprising:
(a) a water-dissipatable polyester comprising polyethylene oxide segment(s);
(b) a self dispersable pigment or a pigment coated with a dispersant;
(c) water; and
(d) water miscible solvent.

The water-dissipatable polyester comprising polyethylene oxide segment(s) (component (a)) is preferably prepared as described in the first aspect of the invention.

Preferred water-dissipatable polyesters are those preferred in the first aspect of the invent

The self-dispersable pigment or pigment coated with a dispersant pigment (component (b)) may be an inorganic or organic pigment able to disperse on mixing in liquid without the addition of any additional dispersing agents. Additional dispersing agents can be optionally added to improve the dispersability of the pigment

Preferred pigment types are those preferred in the first aspect of the invention.

Preferably the self dispersable pigment or pigment coated with a dispersant carries ionic groups on its surface, for example anionic and/or cationic groups. The anionic groups preferably comprise carboxylic, sulphonic or phosphonic acid groups. The cationic groups preferably comprise a quaternary ammonium groups. Pigments coated with dispersant are marketed by Rohm and Haas under the Acryjet trademark, for example AcryJet™ black-357, orange-57, magenta-127, yellow-1547, green-367, cyan-157 and yellow-747. Self dispersable pigments are marketed by Cabot under the CAB-O-JET™ trademark, for example CAB-O-JET™ IJX 266D, CAB-O-JET™ IJX 273B, CAB-O-JET™ IJX 318, CAB-O-JET™ IJX 157.

When used in ink-jet printing the particle size of the pigment is important in achieving an acceptable ink. Thus, it is preferred that the pigment has a mean particle size of from about 5 to 500 nm, more preferably of from 5 to 200 nm. However particle sizes outside of this range may be used, depending on the diameters of the ink-jet printer nozzle.

Preferred water miscible solvents are as in the first aspect of the invention._

Preferably the water miscible solvent comprises a mixture of 2 or more, especially from 2 to 8, water miscible solvents.

The compositions according to the second aspect of the invention may be prepared by combining components (a), (b), (c) and (d) in any order or simultaneously. Suitable combining techniques are well known in the art, for example agitation, grinding, milling, ultrasonication and/or stirring of all the components. Preferably components (a), (b), (c) and (d) are combined together under conditions which retain stability and avoid flocculation. The preferred pH of the composition is from 5 to 11, more preferably of from 5.5 to 8.

Preferably the composition of the second aspect of the invention comprises:
(i) from 0.1 to 20 parts, more preferably 0.1 to 10 parts, especially 0.1 to 5 parts of component (a);
(ii) from 0.1 to 20 parts, more preferably 0.1 to 10 parts, especially 0.1 to 5 parts of component (b);
(iii) from 0.1 to 99.7 parts, more preferably 40 to 90 parts, especially 60 to 80 parts of component (c); and
(iv) from 0.1 to 99.7 parts, more preferably 10 to 60 parts, especially 20 to 40 parts of component (d);
wherein all the parts are by weight and the parts by weight of (i) + (ii) + (iii) +(iv) add up to 100.

In addition to components (a), (b) (c) and (d) the composition of the second aspect of the invention optionally contains other components, such as a biocide, for example Proxel GXL (Proxel is a trade mark of Avecia Limited) or Kathon (Kathon is a trade mark of Rohm and Haas), a fungicide, a rheological agent, e.g. a wax (e.g. beeswax), a clay (e.g. bentonite), an IR absorber, or a fluorescent brightener, for example C.I.Fluorescent Brightener 179 and/or UV absorber, for example hydroxy phenylbenzotriazole. Furthermore the compositions optionally contain a surface active agent, wetting agent and/or an emulsifier, for example those described in McCutcheon's Emulsifiers and Detergents 1996 International Edition or in Surfactants Europa 3^{rd} Edition 1996 each of which is incorporated herein by reference. Dyes may also be added to the composition if desired to alter the shade.

Preferably the composition of the second aspect of the invention is free from water immiscible solvents, it is especially preferred that the composition is free from benzyl alcohol.

Preferably the composition used in the process of the first aspect of the present invention and the composition according to the second aspect of the present invention is free from polyurethanes.

The viscosity of the composition of the second aspect of the invention is preferably less than 100cp(mPa.s), more preferably less than 50cp(mPa.s), especially less than 20cp(mPa.s), more especially less than 15cp(mPa.s) and most preferably less than 10cp(mPa.s) at 20°C.

Preferably the composition of the second aspect of the invention has been filtered through a filter having a mean pore size below 10 µm, preferably below 5 µm, more preferably below 2 µm, especially below 0.5 µm. In this way particulate matter is removed which could otherwise block fine nozzles in an ink-jet printer.

The composition of the second aspect of the invention preferably has a total concentration of divalent and trivalent metal ions, other than those bound to the pigment, below 5000, more preferably below 1000, especially below 100, more especially below 20 parts per million by weight relative to the total weight of the composition. Pure compositions of this type may be prepared by using high purity ingredients and/or by purifying the composition after it has been prepared.

Suitable purification techniques are well known, for example ultrafiltration, reverse osmosis, ion exchange and combinations thereof.

In view of the preferences above, a preferred composition of the second aspect of the invention has the following characteristics;
i) a viscosity less than 100 cp(mPa.s) at 20°C;
ii) the composition has been filtered through a filter having a mean pore size below 10 µm; and
iii) a total concentration of divalent and trivalent metal ions, other than those bound to the pigment, below 5000 parts per million by weight relative to the total weight of the composition.

Preferably the composition of the second aspect of the invention is an ink or liquid dye concentrate, more preferably an ink suitable for use in an ink-jet printer.

The compositions according the invention have the advantage that they are suitable not only for the use in piezoelectric ink-jet printers but also in thermal and continuous ink-jet printers. Such compositions form discrete droplets on the substrate with little tendency for diffusing. Consequently sharp images with excellent print quality and little if any bleed between colours printed side by side can be obtained. Furthermore the compositions show good storage stability, wet- and light- fastness, good gloss and rub resistance and fastness to both acidic and alkaline highlighter pens.

A third aspect of the present invention provides a substrate, especially paper, overhead projector slide, textile material, plastic, glass and metal printed with a composition as described in the second aspect of the invention or by means of a process as described in the first aspect of the invention.

A fourth aspect of the present invention provides an ink-jet printer cartridge comprising a chamber and a composition wherein the composition is in the chamber and the composition is as described in the first and second aspects of the present invention.

The invention will now be described by example only. All parts and percentages are by weight unless specified otherwise.

### Example 1

### Preparation of Water-Dissipatable Polyester

| **Monomer** | **Abbreviation** | **Weight (g)** |
|---|---|---|
| **Stage 1** | | |
| Diethylene glycol | A | 273.6 |
| Neopentyl glycol (100%) | B | 725 |
| 5-Sodiosulphoisophthalic acid | C | 432 |
| Isophthalic acid | D | 850 |
| Fastest 4101 | E | 3 |
| Sodium acetate | F | 8 |
| Water | G | 11.5 |
| 1,6 Hexanediol | H | 400 |
| Methoxy polyethylene glycol 750 | I | 400 |

| **Stage 2** | | |
|---|---|---|
| Isophthalic acid | J | 1025 |
| Fastcat 4101 | K | 1 |

### Stage 1

A reactor was assembled with agitator, condenser and nitrogen sparge. The reactor was sparged with nitrogen and charged with reactants A to I. The reaction temperature was raised to 170°C and stirring was commenced as soon as the reactants allowed. At about 170°C the reaction commenced and the column head temperature was maintained at 100°C by gradually increasing the reactor temperature (at a rate of about 10°C/30 mins) from 170°C to 230°C. The reaction temperature was maintained at 230°C until the column head temperature was seen to decrease and the acid value was <3 mg(KOH)g⁻¹. The hydroxy value was checked and found to be 280 +/- 5 mg(KOH)g⁻¹.

### Stage 2

The reactor was allowed to cool to 120°C and components J and K were added in a molten form. The reaction temperature was raised to 200°C with stirring and the column head temperature was maintained at 100°C by gradually increasing the reactor temperature from 200°C to 230°C. When the column head temperature began to fall vacuum was applied and maintained, the reaction mixtures acid value and viscosity being sampled occasionally (braking the vacuum with nitrogen) until the desired end point was achieved. The final material is a solid resin with the following properties.

| Acid value mgHOH/g (dichloromethane) | 10 |
|---|---|
| Hydroxyl value mgKOH/g | 7.4 |

| ICI C/P melt Viscosity (Poise) | |
|---|---|
| 125°C | >500 |
| 150°C | >500 |
| 165°C | 260 |
| 185°C | 120 |
| 200°C | 68 |
| Onset Tg/C | 25 |

### Example 2

Two sets of yellow, magenta and cyan ink-jet inks were produced based on the AcryJet^{R} range of pigment dispersions. The sets differed in that one set contained the polyester resin of Example 1.

**Table 1**

| Ink Formulations | | |
|---|---|---|
| Components | Without Resin (wt %) | With Resin (wt %) |
| Pigment | 3 | 3 |
| Butyl Glycol | 10 | 10 |
| 2-Pyrolidone | 4 | 4 |
| Glycerol | 10 | 10 |
| Surfynol 465 | 1 | 1 |
| Polyester of Example 1 | 0 | 2 |
| Water | 72 | 70 |

Pigments:
AcryJet^{R} 122 Magenta
AcryJet^{R} 747 Yellow
AcryJet^{R} 157 Cyan

All Inks were filtered through a 0.45-micron filter and printed as individual block prints on a range of media types using an Epson 660 printer. The prints were split in two. One half was kept in the dark and the other half was exposed for 100 hours in an Atlas Ci 5000 Weatherometer with a B10092 - 3000Watt Water Cooled Long Arc Xenon Lamp and borosilicate inner and a soda lime outer filers at 16°C and a relative humidity of 40%. These conditions simulate exposure behind window glass in continuous light.

Light fastness was determined by measuring the difference in absorption of the print kept in the dark and that exposed in the Weatherometer (ΔE). The results are shown in Table 2 below

**Table 2**

| Light Stability | | | |
|---|---|---|---|
| | Light Stability ΔE after 100 Hours | | |
| Media | Xerox 4024 Plain Paper | Epson Glossy Film | Epson Photo Paper |
| | | | |
| Magenta no polyester | 5.7 | 6.4 | 5.9 |
| Magenta + Polyester | 1.7 | 0.8 | 3.2 |
| | | | |
| Yellow no polyester | 5.9 | 7.2 | 4.8 |
| Yellow + Polyester | 0.7 | 1.3 | 2 |
| | | | |
| Cyan no polyester | 5.2 | 9.5 | 4.9 |
| Cyan + Polyester | 3.6 | 1.7 | 3.3 |

The greater the change in optical density (ΔE) after 100 hours exposure the poorer the light fastness of the prints. Thus, the presence of the polyester in all three inks improved the light fastness of all three inks on three different media.

### Example 3

The inks of Example 2 were block printed on to Epson Glossy Film and left to dry. Rub resistance was determined by applying a thumb to print and smearing sideways. Good equates to no transfer or limited transfer of ink to the unprinted area and poor equates to a significant transfer.

**Table 3**

| Rub Resistance and Gloss | | | | |
|---|---|---|---|---|
| **Epson Glossy Film** | **Rub Resistance** | **Gloss - angle of incident light** | | |
| | | **20°** | **60°** | **85°** |
| Magenta (AcryJet^{R} 122) | Poor | 30 | 45 | 60 |
| Magenta + Polyester | Good | 45 | 65 | 93 |
| | | | | |
| Yellow (AcryJet^{R} 747) | Poor | 22 | 47 | 64 |
| Yellow + Polyester | Good | 46 | 50 | 91 |
| | | | | |
| Cyan (AcryJet^{R} 157) | Poor | 28 | 49 | 62 |
| Cyan + Polyester | Good | 48 | 52 | 91 |

The rub resistance and gloss of those inks comprising the water dissipatable polyester was superior to inks lacking the polyester.

### Example 4

Two sets of yellow, magenta, cyan and black ink-jet inks were produced based on the CAB-O-JET™ range of functionalised self dispersable coloured pigments. The sets differed in that one set contained the polyester of Example 1.

**Table 4**

| ink Formulations | | | | | | | | |
|---|---|---|---|---|---|---|---|---|
| Components | All Components As Weight % Solid | | | | | | | |
| CAB-O-JET™ IJX 266D Magenta | 4 | | | | 4 | | | |
| CAB-O-JET™ IJX 273B Yellow | | 3 | | | | 3 | | |
| CAB-O-JET™ IJX 318 Cyan | | | 3 | | | | 3 | |
| CAB-O-JET™ IJX 157 Black | | | | 4 | | | | 4 |
| Butyl Glycol | 10 | 10 | 10 | 10 | 10 | 10 | 10 | 10 |
| 2-Pyrolidone | 4 | 4 | 4 | 4 | 4 | 4 | 4 | 4 |
| Glycerol | 10 | 10 | 10 | 10 | 10 | 10 | 10 | 10 |
| Surfynol 465 | 1 | 1 | 1 | 1 | 1 | 1 | 1 | 1 |
| Polyester | 0 | 0 | 0 | 0 | 5 | 5 | 5 | 5 |
| Water | 71 | 72 | 72 | 71 | 66 | 67 | 67 | 66 |

All Inks were filtered through a 0.45-micron filter and printed as individual block prints on Epson Semi Glossy Photo Paper using an Epson 900 printer. The prints were split in two. One half was kept in the dark and the other half was exposed for 24 hours to 1 ppm ozone at 40°C and 50% relative humidity using a Hampden Test Equipment Ozone Model 903.

Ozone Resistance was determined by measuring the difference in absorption of the print kept in the dark and that exposed to the ozone (ΔE). The results are shown in Table 5 below.

**Table 5**

| Ozone Resistance | | |
|---|---|---|
| **Pigment Ink Colour** | **ΔE 24 Hours Ozone No Polyester** | **ΔE 24 Hours Ozone With Polyester** |
| Magenta 266D | 3.9 | 1.5 |
| Yellow 273B | 1.7 | 0.4 |
| Cyan 318 | 10.7 | 1.8 |
| Black 157 | 0.7 | 0.7 |

The greater the change in optical density (ΔE) after exposure to ozone the poorer the ozone resistance of the prints. Thus magenta, yellow and cyan inks comprising the polyester displayed better ozone resistance than the corresponding inks lacking a water dissipatable polyester.

## Claims

1. A process for ink-jet printing an image on a substrate comprising applying thereto a composition comprising:
(a) water-dissipatable polyester comprising polyethylene oxide segment(s);
(b) pigment;
(c) water; and
(d) water miscible solvent.

2. A process according to claim 1 wherein the water dissipatable polyester comprises 0.1 to 25% by weight of the polyethylene oxide segment based on the total weight of polyester.

3. A process according to claim 1 or claim 2 wherein the water dissipatable polyester further comprises ionised carboxy and/or sulphonate groups.

4. A process according to any one of the preceding claims wherein the water dissipatable polyester comprising polyethylene oxide segment(s) comprises polyethylene oxide segment(s) derived from methoxy polyethylene glycol.

5. A process according to anyone of the preceding claims wherein the water-dissipatable polyester comprising polyethylene oxide segment(s) has a Mn of up to 30,000.

6. A process according to any one of the preceding claims wherein the pigment is selected from yellow, red, orange, green, violet, indigo, white, blue, or black organic and/or inorganic pigment.

7. A process according to any one of the preceding claims wherein the pigment is a self dispersable pigment or a pigment coated with a dispersant.

8. A process according to any one of the preceding claims wherein the composition has a total concentration of divalent and trivalent metal ions, other than those bound to the pigment, below 5000 parts per million by weight relative to the total weight of the composition.

9. A process according to any one of the preceding claims wherein the composition has a viscosity less than 100 cp (mPa.s) at 20°C.

10. A process according to any one of the preceding claims wherein the composition has the following characteristics:
(i) a viscosity less than 100 cp (mPa.s) at 20°C;
(ii) the composition has been filtered through a filter having a mean pore size below 10µm; and
(iii) a total concentration of divalent and trivalent metal ions, other than those associated with the pigment, below 5000 parts per million by weight relative to the total weight of the composition.

11. A process according to any one of the preceding claims wherein the composition comprises:
(i) from 0.1 to 20 parts of component (a);
(ii) from 0.1 to 20 parts of component (b);
(iii) from 0.1 to 99.7 parts of component (c);
(iv) from 0.1 to 99.7 parts of component (d);
wherein all the parts are by weight and the parts by weight of (i) + (ii) + (iii) + (iv) add up to 100.

12. An ink composition for ink jet printing comprising:
(a) a water-dissipatable polyester comprising polyethylene oxide segment(s);
(b) a self dispersable pigment or a pigment coated with a dispersant;
(c) water; and
(d) water miscible solvent.

13. A composition according to claim 12 wherein the water dissipatable polyester comprises 0.1 to 25% by weight of the polyethylene oxide segment based on the total weight of polyester.

14. A composition according to claim 12 or claim 13 wherein the water dissipatable polyester further comprises ionised carboxy and/or sulphonate groups.

15. A composition according to any one of claims 12 to 14 wherein the water dissipatable polyester comprising polyethylene oxide segment(s) comprises polyethylene oxide segment(s) derived from methoxy polyethylene glycol.

16. A composition according to anyone of claims 12 to 15 wherein the water-dissipatable polyester comprising polyethylene oxide segment(s) has a Mn of up to 30,000.

17. A composition according to any one of claims 12 to 16 wherein the pigment is selected from yellow, red, orange, green, violet, indigo, white, blue, or black organic and/or inorganic pigment.

18. A composition according to any one of claims 12 to 17 wherein the pigment carries ionic groups on its surface.

19. A composition according to any one of claims 12 to 18 wherein the composition has a total concentration of divalent and trivalent metal ions, other than those bound to the pigment, below 5000 parts per million by weight relative to the total weight of the composition.

20. A composition according to any one of claims 12 to 19 wherein the composition has a viscosity less than 100 cp (mPa.s) at 20°C.

21. A composition according to any one of claims 12 to 20 wherein the composition has the following characteristics:
(i) a viscosity less than 100 cp (mPa.s) at 20°C;
(ii) the contents of the composition have a mean size below 10µm; and
(iii) a total concentration of divalent and trivalent metal ions, other than those associated with the pigment, below 5000 parts per million by weight relative to the total weight of the composition.

22. A composition according to any one of claims 12 to 21 wherein the composition comprises:
(i) from 0.1 to 20 parts of component (a);
(ii) from 0.1 to 20 parts of component (b);
(iii) from 0.1 to 99.7 parts of component (c);
(iv) from 0.1 to 99.7 parts of component (d);
wherein all the parts are by weight and the parts by weight of (i) + (ii) + (iii) + (iv) add up to 100.

23. An ink or liquid dye concentrate comprising a composition according to any one of claims 12 to 22.

24. A paper, an overhead projector slide, textile material, plastic, glass and metal printed with a composition according to any one of claims 12 to 23.

25. An ink-jet printer cartridge comprising a chamber containing an ink composition as claimed in any one of claims 12 to 23.

## Patentansprüche

1. Verfahren zum Bedrucken eines Substrats mit einem Bild nach dem Tintenstrahldruckverfahren, bei dem man eine
(a) einen mindestens ein Polyethylenoxidsegment enthaltenden wasserverteilbaren Polyester,
(b) ein Pigment,
(c) Wasser sowie
(d) ein mit Wasser mischbares Lösungsmittel
enthaltende Zusammensetzung auf das Substrat aufdruckt.

2. Verfahren nach Anspruch 1, bei dem der wasserverteilbare Polyester bezogen auf sein Gesamtgewicht 0,1 bis 25 Gew.-% an Polyethylenoxidsegment enthält.

3. Verfahren nach einem der Ansprüche 1 oder 2, bei dem der wasserverteilbare Polyester zusätzlich ionisierte Carboxy- und/oder Sulfonatgruppen enthält.

4. Verfahren nach einem der vorhergehenden Ansprüche, bei dem der mindestens ein Polyethylenoxidsegment enthaltende wasserverteilbare Polyester mindestens ein sich von Methoxypolyethylenglykol ableitendes Polyethylenoxidsegment enthält.

5. Verfahren nach einem der vorhergehenden Ansprüche, bei dem der mindestens ein Polyethylenoxidsegment enthaltende wasserverteilbare Polyester ein Molekulargewicht Mn von bis zu 30 000 aufweist.

6. Verfahren nach einem der vorhergehenden Ansprüche, bei dem man das Pigment unter gelben, roten, orange, grünen, violetten, indigo, weißen, blauen oder schwarzen organischen und/oder anorganischen Pigmenten auswählt.

7. Verfahren nach einem der vorhergehenden Ansprüche, bei dem man als Pigment ein selbstdispergierendes Pigment oder ein mit einem Dispergiermittel belegtes Pigment einsetzt.

8. Verfahren nach einem der vorhergehenden Ansprüche, bei dem die Zusammensetzung bezogen auf das Gesamtgewicht der Zusammensetzung eine Gesamtkonzentration an nicht an das Pigment gebundenen zwei- und dreiwertigen Metallionen von weniger als 5000 Gewichts-ppm aufweist.

9. Verfahren nach einem der vorhergehenden Ansprüche, bei dem die Zusammensetzung bei 20°C eine Viskosität von weniger als 100 cp (mPa.s) aufweist.

10. Verfahren nach einem der vorhergehenden Ansprüche, bei dem die Zusammensetzung folgende Kennzeichen besitzt:
(i) eine Viskosität von weniger all 100 cp (mPa.s) bei 20°C,
(ii) die Zusammensetzung wurde über ein Filter mit einer mittleren Porenweite von weniger als 10 µm filtriert sowie
(iii) eine Gesamtkonzentration an nicht mit dem Pigment assoziierten zwei- und dreiwertigen Metallionen von weniger als 5000 Gewichts-ppm, bezogen auf das Gesamtgewicht der Zusammensetzung.

11. Verfahren nach einem der vorhergehenden Ansprüche, bei dem die Zusammensetzung
(i) die Komponente (a) in einer Menge von 0,1 bis 20 Teile,
(ii) die Komponente (b) in einer Menge von 0,1 bis 20 Teile,
(iii) die Komponente (c) in einer Menge von 0,1 bis 99,7 Teile,
(iv) die Komponente (d) in einer Menge von 0,1 bis 99,7 Teile
enthält, wobei es sich bei allen Teilen um Gewichtsteile handelt und sich die Gewichtsteile an (i) + (ii) + (iii) + (iv) auf 100 summieren.

12. Tintenzusammensetzung für den Tintenstrahldruck, enthaltend:
(a) einen mindestens ein Polyethylenoxidsegment enthaltenden wasserverteilbaren Polyester,
(b) ein selbstdispergierendes Pigment oder ein mit einem Dispergiermittel belegtes Pigment,
(c) Wasser sowie
(d) ein mit Wasser mischbares Lösungsmittel.

13. Zusammensetzung nach Anspruch 12, bei der der wasserverteilbare Polyester bezogen auf sein Gesamtgewicht 0,1 bis 25 Gew.-% an Polyethylenoxidsegment enthält.

14. Zusammensetzung nach einem der Ansprüche 12 oder 13, bei der der wasserverteilbare Polyester zusätzlich ionisierte Carboxy- und/oder Sulfonatgruppen enthält.

15. Zusammensetzung nach einem der Ansprüche 12 bis 14, bei der der mindestens ein Polyethylenoxidsegment enthaltende wasserverteilbare Polyester mindestens ein sich von Methoxypolyethylenglykol ableitendes Polyethylenoxidsegment enthält.

16. Zusammensetzung nach einem der Ansprüche 12 bis 15, bei der der mindestens ein Polyethylenoxidsegment enthaltende wasserverteilbare Polyester ein Molekulargewicht Mn von bis zu 30 000 aufweist.

17. Zusammensetzung nach einem der Ansprüche 12 bis 16, bei der das Pigment unter gelben, roten, orange, grünen, violetten, indigo, weißen, blauen oder schwarzen organischen und/oder anorganischen Pigmenten ausgewählt ist.

18. Zusammensetzung nach einem der Ansprüche 12 bis 17, bei der das Pigment an seiner Oberfläche ionische Gruppen trägt.

19. Zusammensetzung nach einem der Ansprüche 12 bis 18, bei der die Zusammensetzung bezogen auf das Gesamtgewicht der Zusammensetzung eine Gesamtkonzentration an nicht an das Pigment gebundenen zwei- und dreiwertigen Metallionen von weniger als 5000 Gewichts-ppm aufweist.

20. Zusammensetzung nach einem der Ansprüche 12 bis 19, bei der die Zusammensetzung bei 20°C eine Viskosität von weniger als 100 cp (mPa.s) aufweist.

21. Zusammensetzung nach einem der Ansprüche 12 bis 20, bei der die Zusammensetzung folgende Kennzeichen besitzt:
(i) eine Viskosität von weniger als 100 cp (mPa.s) bei 20°C,
(ii) eine mittlere Größe von weniger als 10 µm sowie
(iii) eine Gesamtkonzentration an nicht mit dem Pigment assoziierten zwei- und dreiwertigen Metallionen von weniger als 5000 Gewichts-ppm, bezogen auf das Gesamtgewicht der Zusammensetzung.

22. Zusammensetzung nach einem der Ansprüche 12 bis 21, bei der die Zusammensetzung
(i) die Komponente (a) in einer Menge von 0,1 bis 20 Teile,
(ii) die Komponente (b) in einer Menge von 0,1 bis 20 Teile,
(iii) die Komponente (c) in einer Menge von 0,1 bis 99,7 Teile,
(iv) die Komponente (d) in einer Menge von 0,1 bis 99,7 Teile
enthält, wobei es sich bei allen Teilen um Gewichtsteile handelt und sich die Gewichtsteile an (i) + (ii) + (iii) + (iv) auf 100 summieren.

23. Tinte oder Farbstofflüssigkonzentrat, enthaltend eine Zusammensetzung gemäß einem der Ansprüche 12 bis 22.

24. Papier, Overheadprojektorfolie, Textilmaterial, Kunststoff, Glas und Metall, bedruckt mit einer Zusammensetzung gemäß einem der Ansprüche 12 bis 23.

25. Tintenstrahldruckerpatrone mit Kammer, enthaltend eine Tintenzusammensetzung gemäß einem der Ansprüche 12 bis 23.

## Revendications

1. Procédé d'impression à jet d'encre d'une image sur un substrat, comprenant l'application sur celui-ci d'une composition comprenant :
(a) un polyester capable d'être dissipé dans l'eau comprenant un ou plusieurs segments d'oxyde de polyéthylène ;
(b) un pigment ;
(c) de l'eau ; et
(d) un solvant miscible dans l'eau.

2. Procédé selon la revendication 1, dans lequel le polyester capable d'être dissipé dans l'eau comprend un pourcentage pondéral du segment d'oxyde de polyéthylène représentant entre 0,1 et 25 % du poids total du polyester.

3. Procédé selon la revendication 1 ou la revendication 2, dans lequel le polyester capable d'être dissipé dans l'eau comprend en outre des groupes carboxy et/ou sulfonate ionisés.

4. Procédé selon l'une quelconque des revendications précédentes, dans lequel le polyester capable d'être dissipé dans l'eau comprenant le ou les segment(s) d'oxyde de polyéthylène comprend un ou plusieurs segments d'oxyde de polyéthylène dérivés de méthoxy-polyéthylène glycol.

5. Procédé selon l'une quelconque des revendications précédentes, dans lequel le polyester capable d'être dissipé dans l'eau comprenant le ou les segment(s) d'oxyde de polyéthylène a une valeur Mn jusqu'à 30 000.

6. Procédé selon l'une quelconque des revendications précédentes, dans lequel le pigment est sélectionné parmi les pigments jaunes, rouges, oranges, verts, violets, indigo, blancs, bleus ou noirs, organiques et/ou inorganiques.

7. Procédé selon l'une quelconque des revendications précédentes, dans lequel le pigment est un pigment autodispersable ou un pigment enrobé d'un dispersant.

8. Procédé selon l'une quelconque des revendications précédentes, dans lequel la composition a une concentration totale d'ions métalliques divalents et trivalents, autres que ceux fixés au pigment, inférieure à 5 000 parties par million en poids par rapport au poids total de la composition.

9. Procédé selon l'une quelconque des revendications précédentes, dans lequel la composition a une viscosité inférieure à 100 cp (mPa.s) à 20°C.

10. Procédé selon l'une quelconque des revendications précédentes, dans lequel la composition présente les caractéristiques suivantes :
(i) une viscosité inférieure à 100 cp (mPa.s) à 20°C ;
(ii) la composition a été filtrée à travers un filtre ayant une grosseur moyenne de pore inférieure à 10 µm ; et
(iii) une concentration totale d'ions métalliques divalents et trivalents, autres que ceux associés au pigment, inférieure à 5 000 parties par million en poids par rapport au poids total de la composition.

11. Procédé selon l'une quelconque des revendications précédentes, dans lequel la composition comprend :
(i) entre 0,1 et 20 parties de composant (a) ;
(ii) entre 0,1 et 20 parties de composant (b) ;
(iii)entre 0,1 et 99,7 parties de composant (c) ;
(iv) entre 0,1 et 99,7 parties de composant (d) ;
dans laquelle toutes les parties sont en poids et les parties en poids de (i) + (ii) + (iii) + (iv) représentent un total de 100.

12. Composition d'encre pour impression à jet d'encre, comprenant :
(a) un polyester capable d'être dissipé dans l'eau comprenant un ou plusieurs segments d'oxyde de polyéthylène ;
(b) un pigment autodispersable ou un pigment enrobé d'un dispersant ;
(c) de l'eau ; et
(d) un solvant miscible dans l'eau.

13. Composition selon la revendication 12, dans laquelle le polyester capable d'être dissipé dans l'eau comprend un pourcentage pondéral du ou des segment(s) d'oxyde de polyéthylène représentant entre 0,1 et 25 % du poids total du polyester.

14. Composition selon la revendication 12 ou la revendication 13, dans laquelle le polyester capable d'être dissipé dans l'eau comprend en outre des groupes carboxy et/ou sulfonate ionisés.

15. Composition selon l'une quelconque des revendications 12 à 14, dans laquelle le polyester capable d'être dissipé dans l'eau comprenant le ou les segment(s) d'oxyde de polyéthylène comprend un ou plusieurs segments d'oxyde de polyéthylène dérivés de méthoxy-polyéthylène glycol.

16. Composition selon l'une quelconque des revendications 12 à 15, dans laquelle le polyester capable d'être dissipé dans l'eau comprenant le ou les segment(s) d'oxyde de polyéthylène a une valeur Mn jusqu'à 30 000.

17. Composition selon l'une quelconque des revendications 12 à 16, dans laquelle le pigment est sélectionné parmi les pigments jaunes, rouges, oranges, verts, violets, indigo, blancs, bleus ou noirs, organiques et/ou inorganiques.

18. Composition selon l'une quelconque des revendications 12 à 17, dans laquelle le pigment porte des groupes ioniques sur sa surface.

19. Composition selon l'une quelconque des revendications 12 à 18, dans laquelle la composition a une concentration totale d'ions métalliques divalents et trivalents, autres que ceux fixés au pigment, inférieure à 5 000 parties par million en poids par rapport au poids total de la composition.

20. Composition selon l'une quelconque des revendications 12 à 19, dans laquelle la composition a une viscosité inférieure à 100 cp (mPa.s) à 20°C.

21. Composition selon l'une quelconque des revendications 12 à 20, dans laquelle la composition présente les caractéristiques suivantes :
(i) une viscosité inférieure à 100 cp (mPa.s) à 20°C ;
(ii) les éléments constituants de la composition ont une grosseur moyenne inférieure à 10 µm ; et
(iii) une concentration totale d'ions métalliques divalents et trivalents, autres que ceux associés au pigment, inférieure à 5 000 parties par million en poids par rapport au poids total de la composition.

22. Composition selon l'une quelconque des revendications 12 à 21, dans laquelle la composition comprend :
(i) entre 0,1 et 20 parties de composant (a) ;
(ii) entre 0,1 et 20 parties de composant (b) ;
(iii)entre 0,1 et 99,7 parties de composant (c) ;
(iv) entre 0,1 et 99,7 parties de composant (d) ;
dans laquelle toutes les parties sont en poids et les parties en poids de (i) + (ii) + (iii) + (iv) représentent un total de 100.

23. Encre ou colorant liquide concentré comprenant une composition selon l'une quelconque des revendications 12 à 22.

24. Papier, transparent pour rétroprojecteur, matériau textile, plastique, verre et métal imprimé avec une composition selon l'une quelconque des revendications 12 à 23.

25. Cartouche d'imprimante à jet d'encre comprenant une chambre contenant une composition d'encre selon l'une quelconque des revendications 12 à 23.
